# EUROPEAN PATENT SPECIFICATION

(11) **EP 2 974 634 B1**
(45) Date of publication and mention of the grant of the patent: **02.09.2020**
(21) Application number: 15175626.9
(22) Date of filing: 07.07.2015
(51) Int. Cl.: A47J 31/36, A47J 31/44

(54) **INFUSION DEVICE FOR MAKING AN INFUSED DRINK SUCH AS COFFEE, TEA, HERBAL TEA, CHOCOLATE, ETC**
INFUSIONSVORRICHTUNG ZUR HERSTELLUNG EINES BRÜHGETRÄNKS WIE ETWA KAFFEE, TEE, KRÄUTERTEE, KAKAO USW.
DISPOSITIF DE PERFUSION POUR LA FABRICATION D'UNE BOISSON INFUSÉE TELLE QUE CAFÉ, THÉ, TISANE, CHOCOLAT, ETC.

(30) Priority: 18.07.2014 CH 10922014
(43) Date of publication of application: 20.01.2016
(73) Proprietor: Scacco S.A., 6900 Lugano (CH)
(72) Inventor: CAPITANI, Emilio Alfredo, 6900 Lugano (CH)
(74) Representative: Fabiano, Piero

(56) References cited:
- EP-A1- 1 967 100
- EP-A1- 2 238 878
- EP-A1- 2 356 928
- WO-A1-2012/156167
- CN-U- 203 468 348
- US-A1- 2007 221 066

## Description

### FIELD OF THE INVENTION

The present invention concerns an infusion device to make an infused beverage such as coffee, tea, tisanes, chocolate, etc., from a capsule or pod containing an aromatic substance.

In particular, the present invention refers to an infusion device shaped to cooperate with a removable capsule-holder or pod-holder or with removable adapters for capsules or pods.

### KNOWN ART

Known infusion devices for coffee machines usually comprise a first infusing member, normally named female infuser, which is cup-shaped and comprises a recess adapted to house an infusion capsule and/or pod, and contains an aromatic essence, and a second member, normally named male infuser, adapted to close the afore said recess to define an infusion chamber in conjunction with the first infusing member.

The capsule, containing the aromatic essence, is put or moved inside the infusion chamber so that the aromatic essence is extracted by introducing pressurized hot water into the infusion capsule and/or pod.

The infusion chamber is communicating with at least one outlet duct for the infused beverage, ending with an outlet nozzle or hopper for the beverage.

Machine are known, wherein the first and the second infusing members are substantially vertically arranged and the infusion chamber forms due to the vertical translation of the second infusing member, or a portion thereof, with respect to the first fixed infusing member.

Document US3260190 describes such a machine.

Document EP1967100 discloses a known infusion device for coffee machines.

The Applicant observed that, because of the stated and rigid movements of the infusing members, keeping a perfect closure of the infusion chamber along the circumference of the capsule or pod is not always possible.

In case the capsule or pod is contained in an apposite capsule-holder or pod-holder comprising, for example, a flange engaging the first or the second infusing member to make the closure of the infusion chamber, the above mentioned problem could become greater.

The Applicant further observed that, in known machines, the infusion chamber is sized and shaped depending on the capsule or pod to be accommodated.

In other terms, an infusion machine with capsules or pods can operate with only one type of capsules or pods, specifically of the type the infusion chamber has been designed for.

In the Application ITRM2014A00065 in the name of the same Applicant, the latter tackled the problem of making a machine for producing beverages infused from pods or capsules, usable with different typologies of pods and/or capsules, by providing an adapter for capsules or pods.

In the Applicant's opinion, also in this case the issues of guaranteeing the closure of the infusion chamber in a stated and fixed plane can be critical just because the closure of the two infusing members could not adapt to different types of adapters for capsules or pods.

Therefore, the Applicant tackled the problem of realizing a device or infusion assembly particularly for machines providing for removable capsule-holder or pod-holder or with removable adapters for capsules or pods, which allows an appropriate closure substantially along the whole circumference of the capsule or pod.

Therefore, the Applicant tackled the problem of guaranteeing the closure of the infusion chamber not in a fixed and stated plane, as in known machines.

### SUMMARY OF THE INVENTION

Therefore the invention, in a first aspect thereof, concerns an infusion device, particularly for machines for preparing an infusion beverage with a capsule containing an aromatic substance, comprising:
- a first infusing member,
- a second infusing member adapted for cooperating with said first infusing member; said second infusing member comprising a housing seat for a capsule-holder or a pod-holder;
- said capsule-holder or pod-holder comprising a recess for at least partially accommodating an infusion capsule;
- said capsule-holder or pod-holder being removably introducible in said housing seat;
- said second infusing member being hinged to said first infusing member along a hinge axis (X-X) to rotate with respect to said first infusing member between a closed position, in which said second infusing member closes said first infusing member to define a capsule-holder or pod-holder inserted in said housing seat, an infusion chamber and a rotated open position in which said second infusing member is partially spaced from the first infusing member of a distance allowing the capsule-holder or pod-holder to be drawn out;
- said second infusing member being hinged to said first infusing member (3) so that the hinge axis is free to pitch;
characterised in that it comprises
- activating means adapted to activate the second infusing member (5) for the rotation movement from the open position to the closed position, and vice versa;
- said activating means comprise at least one pivot member (27) and at least one curvilinear profile,
- said pivot member takes the form of a manually operable lever (26) operatively hinged to the first infusing member so that the rotation of said lever in a way entails the rotation of said at least one pivot member with respect to said curvilinear profile integral to said second infusing member and , consequently, the movement of the second infusing member from said open position to said closed position;
- said at least one curvilinear profile is made so that its convexity faces said at least one pivot member.

Preferably, said second infusing member is hinged to said first infusing member so that the hinge axis is also free to vertically translate.

In the scope of the present invention with "vertical", "vertically" it is referred to a direction substantially parallel or a little tilted with respect to the symmetry axis of the recess of the capsule-holder or pod-holder.

With "transversal", "transversally" it is referred to a direction substantially perpendicular to the vertical direction.

With pitching it is referred to a member oscillation, such as for example the hinge axis, around a general axis orthogonal to the transversal and vertical axis.

The present invention, in the afore said aspect, may have at least one of the favorite features described hereinbelow.

Preferably, the second infusing member comprises a distal portion and a proximal portion; the second infusing member being hinged to the first infusing member at the distal portion so that, in the closed position, the proximal portion is coupled to a corresponding proximal portion of the first infusing member whereas, in said open position, the proximal portion of the second infusing member is angularly spaced from the proximal portion of the first infusing member.

Advantageously, the second infusing member comprises at least one hinge pin hinging the first infusing member, said hinge pin sliding in a slot extending substantially vertically.

Preferably, the slot has a vertical extent of at least 3 mm.

Conveniently, there are two hinge pins arranged along the hinge axis, each adapted to slide in a slot extending substantially vertically in the first infusing member.

Advantageously, the activating lever comprises two pivot members each adapted to cooperate with a curvilinear profile integral to said second infusing member.

Advantageously, the second infusing member is made in one piece with two side tines transversely spaced to define the housing seat for the capsule-holder.

Further characteristics and advantages of the invention will be more evident from the detailed description of some preferred embodiments, but not exclusive, of an infusion device for making an infused beverage from a capsule or pod according to the present invention.

### BRIEF DESCRIPTION OF THE DRAWINGS

Such a description will be hereinafter explained referring to the attached drawings, provided for purposes of illustrations only, and thereby not limitative, wherein:
- figure 1 shows a schematic view of a first embodiment of an infusion assembly for a machine for preparing an infused beverage in a closed position;
- figure 2 shows a schematic view of the infusion assembly shown in figure 1 in an open position;
- figure 3 shows a schematic view of the infusion assembly shown in figure 1 during the opening movement of the first infusing member;
- figure 4 is another schematic view of the infusion assembly shown in figure 1;
- figure 5 shows a schematic view of a second embodiment of the infusion assembly for a machine for preparing an infused beverage in a closed position;
- figure 6 shows a schematic view of the infusion assembly shown in figure 5 during the opening movement of the second infusing member.

### DETAILED DESCRIPTION OF SOME EMBODIMENTS OF THE

### INVENTION

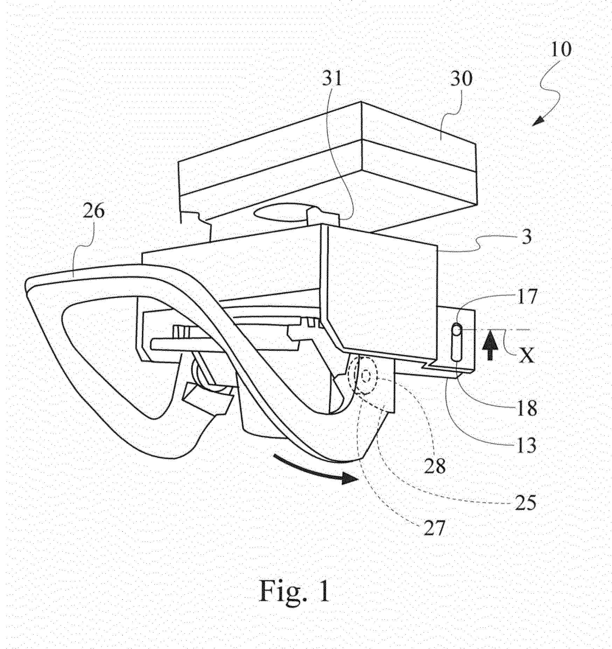

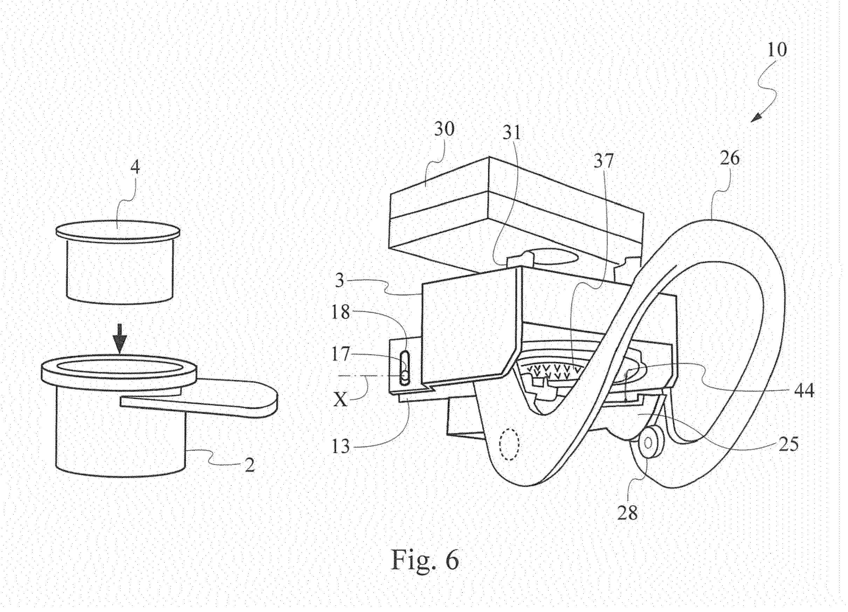

Referring to figures 1-6, an infusion device, in particular for machines for preparing an infused beverage through a capsule 44 containing an aromatic substance, according to the present invention, is depicted with the numeral reference 10.

The infusion device 10, as shown in figures, comprises a first infusing member 3 and a second infusing member 5 and a capsule-holder 2 or pod-holder. The second infusing member 5 and the capsule-holder 2 or pod-holder cooperate with the first infusing member 3 to make the infusion chamber 4.

The second infusing member 5 has a housing seat for a pod-holder or capsule-holder 2.

In the embodiment shown in figures 1-7, it is referred to a capsule-holder 2, but what mentioned can be applied to a capsule-holder or an adapter such as that one described in the Application ITRM2014A00065 in the name of the same Applicant.

The capsule-holder 2 or pod-holder can be removably inserted in a housing seat 40 obtained in the second infusing member 5.

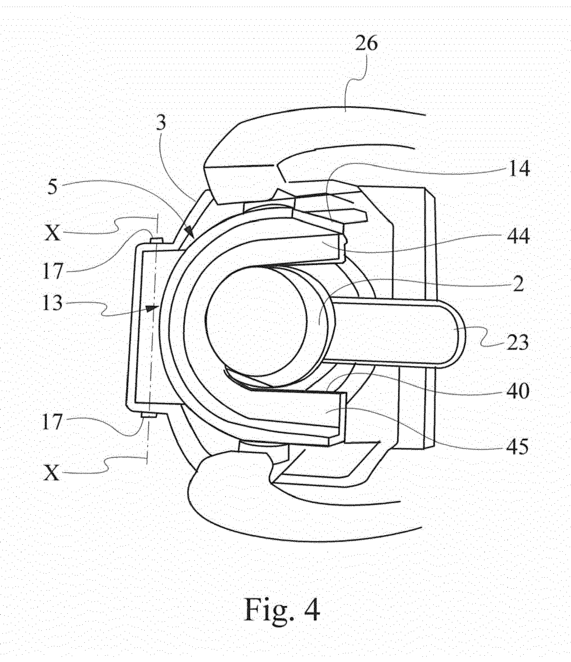

Advantageously, as better shown in figure 4, the second infusing member 5 is shaped in one piece with two side tines 44, 45 transversely spaced to define the housing seat 40 for the capsule-holder 2.

The capsule-holder 2 has a recess 22 for accommodating at least partially an infusion capsule 4 and a handle 23 allowing the user to manually insert or draw out the capsule-holder 2 from the appropriate housing seat 40.

In the embodiment shown in figure 1, the first infusing member 3 is obtained in an upper fixed portion of the frame of the machine for preparing coffee, whereas the second infusing member 5 is arranged under the first infusing member 3 and is movable with respect to the latter.

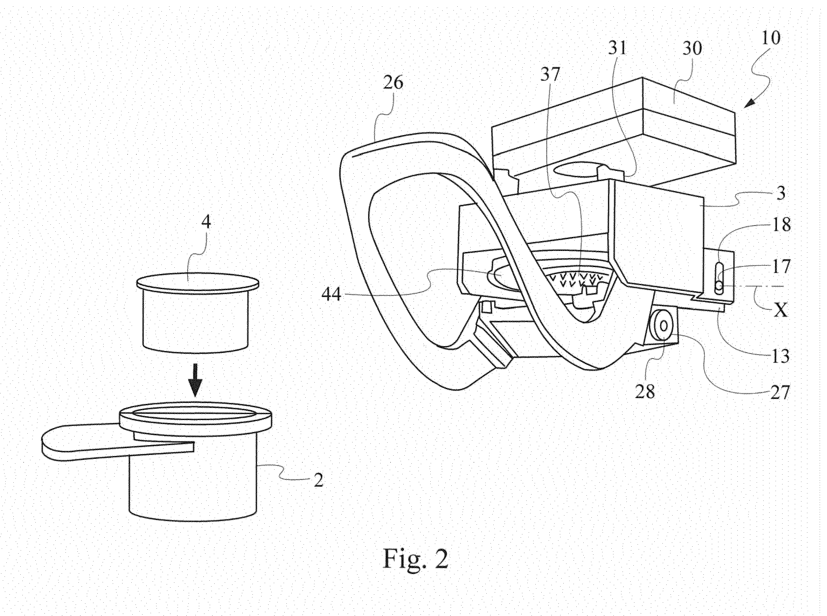

In particular, the second infusing member 5 is hinged to the first infusing member along a hinge axis X-X to rotate with respect to the first infusing member 3 between a closed position, shown in figure 1, in which the second infusing member 5 closes the first infusing member 3 to define a capsule-holder 2 or pod-holder inserted in the housing seat 40, an infusion chamber and a rotated open position shown in figure 2, in which the second infusing member 5 is partially spaced from the first infusing member 3 of a distance allowing the capsule-holder 2 to be drawn out or inserted.

In the closed position, the second infusing member 5 is moved closer, together with the capsule-holder, to the first infusing member 3 so that the infusion chamber can be hermetically closed.

For this purpose, an annular gasket 44 is arranged between the first infusing member 3 and the second infusing member 5, and in particular between the first infusing member 3 and the capsule-holder 2.

In the embodiment shown in figures 1-4, the annular gasket 44 is arranged in a circular groove obtained on the first infusing member 3.

Alternatively, the gasket 44 might be arranged in a circular groove placed on the capsule-holder 2 or on the second infusing member 5.

Referring to the embodiment shown in figures, the second infusing member 5 comprises a distal portion 13 and a proximal portion 14.

The proximal portion is depicted by two tines 44, 45.

Analogously, the first infusing member 3 comprises a distal portion adapted to cooperate with the corresponding distal portion 13 of the second infusing member 5 and a proximal portion adapted to cooperate, in the closed position, with the corresponding proximal portion of the second infusing member 5.

In other terms, the second infusing member 5 is hinged to the first infusing member 3 at the distal portion 13 so that, in the closed position shown in figure 1, the proximal portion is coupled to a corresponding proximal portion of the first infusing member 3 whereas, in the open position shown in figure 2, the proximal portion of the second infusing member 5 is angularly spaced from the proximal portion of the first infusing member 3.

According to an important aspect of the present invention, the infusing member 5 is hinged to the first infusing member 3 so that the hinge axis X-X is free to translate substantially vertically and to pitch, or simply to pitch.

In the Applicant's opinion, this allows the second infusing member 5 to close on the first infusing member 3 not in a fixed and stated plane, but in a plane adapting to the type of capsule-holder 2 or pod-holder, for example, thereby not generating tensions or stresses on the latter.

The second infusing member 5 comprises at least one hinge pin 17 to hinge the first infusing member 3.

Preferably, the hinge pin 17 slides in a slot 18 extending substantially vertically.

In the embodiment shown in figures, the second infusing member 5 has two hinge pins 17 arranged along the hinge axis X-X, each adapted to slide in a slot 18 of the first infusing member 3, which extends substantially vertically.

Preferably, the slot 18 has a vertical extent of at least 3 mm. Still more preferably, the slot has a vertical extent of at least 4 mm.

The slot 18 has a maximum vertical extent of 20 mm, preferably a maximum vertical extent of 15 mm.

Although in the description it is referred to the hinge pins 17 being made integral to the second infusing member 5 and the respective slot 18 being made integral with the first infusing member 3, of course also the opposite arrangement, i.e. with the pins 17 integral to the first infusing member 3 and the respective slots 18 integral to the second infusing member 5, is possible without departing from the protective scope of the present invention.

The device 10 according to the present invention further has activating means 20 adapted to activate the second infusing member 5 for the rotation movement from the open position to the closed position, and vice versa.

Preferably, the activating means 20 comprise at least one pivot member and at least one curvilinear profile 25.

In the embodiment shown in figures 1-4, the curvilinear profile 25 depicted with the dotted line in figure 1, takes the form of a manually operable lever 26 operatively hinged to the first infusing member 3 so that the rotation of the lever 26 in a way entails the rotation of the curvilinear profile 25 with respect to the pivot member 27 and, consequently, the movement of the second infusing member 5 from the open position, shown in figure 2, to the closed position shown in figure 1.

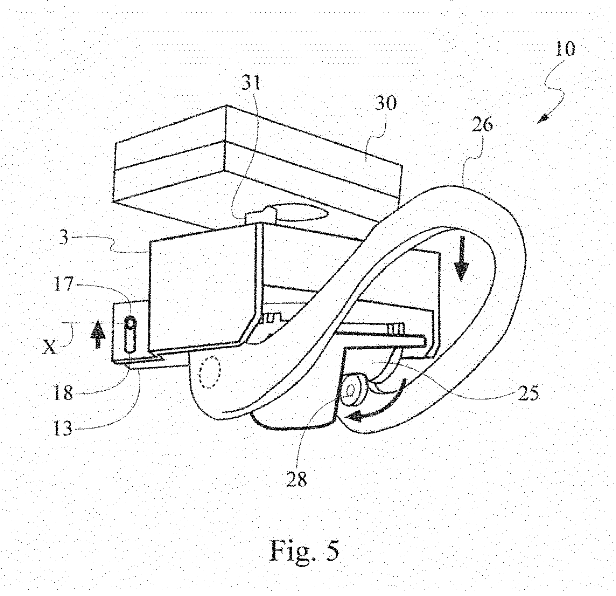

Alternatively, according to an embodiment shown in figures 5-6 and better described in the following, the pivot member 27 takes the form of a manually operable lever 26 operatively hinged to the first infusing member 3 so that the rotation of said lever in a way entails the rotation of said at least one pivot member 27 with respect to said curvilinear profile 25 integral to the second infusing member 5 and, consequently, the movement of the second infusing member 5 from said open position to said closed position.

On the contrary, still referring to the embodiment shown in figures 1-4, the activating lever 26 usually having a U-shape, comprises two curvilinear profiles 25 each adapted to cooperate with a pivot member 27 arranged at the two transversely opposite ends of the second infusing member 5. The pivot member 27, in this case, is depicted by a bearing 28 hinged to the second infusing member 5.

By lowering the manual lever 26, each curvilinear profile engages the bearing 28 and, by a further lowering of the lever 26, each bearing 28 slides on the curvilinear profile 25 thereby causing the movement of the second infusing member 5 from the open position to the closed position.

For this reason each curvilinear profile 25 is substantially arranged along an arc of circle.

Preferably, the curvilinear profile 25 is arranged so that its own concavity faces the pivot member 27.

Vice versa, by raising the manual lever 26, each curvilinear profile 25 slides with respect to the bearing 28 until disengagement therefrom, thereby causing the movement of the second infusing member 5 from the closed position to the open position.

In the embodiment shown in figures, the manual lever has a vertical extent from its hinge point lower than 50 mm, still more preferably lower than 40 mm.

As previously mentioned, in figures 5-6 an alternative embodiment is shown, in which the pivot member 27 is made integral with the manually operable lever 26.

The lever 26 is operatively hinged to the first infusing member 3, so that the rotation of the lever 26 in a way entails the rotation of the pivot member 27 with respect to the curvilinear profile 25 integral, in this case, to the second infusing member 5 and, consequently, the movement of the second infusing member 5 from the open position to the closed position.

Still referring to this embodiment shown in figures 5-6, the activating lever 26 is U-shaped and comprises two pivot members 27 each depicted by a bearing 28. Each bearing 28 is adapted to cooperate with a curvilinear profile 25. The two curvilinear profiles 25 are arranged at the two transversely opposite ends of the second infusing member 5.

According to this embodiment, each curvilinear profile 25 is made so that its convexity faces a pivot member 27 denoted by the bearing 28.

By lowering the manual lever 26, each bearing 28 engages a curvilinear profile 25 and, by a further lowering of the lever 26, each bearing 28 slides on the curvilinear profile 25 thereby causing the movement of the second infusing member 5 from the open position to the closed position, shown in figure 5.

Vice versa, by raising the manual lever 26, each bearing 28 slides with respect to the curvilinear profile 25 until disengagement therefrom, thereby causing the movement of the second infusing member 5 from the closed position to the open position.

Each curvilinear profile 25 has at least one first substantially straight length, at least one second substantially straight length and at least one curved length interposed between said first and second straight lengths.

The first substantially straight length has an extent greater than the second substantially straight length and is the first one contacted by the bearing 28 from the open position to the closed position of the second infusing member 5.

In this way in the closed position, by increasing the pressure on the second infusing member 5, the curvilinear profile prevents the opening thereof.

In both the above described embodiments, the distance between the axis of the pivot member 27 and the hinge axis of the lever 26 to the second infusing member 5 is smaller than 5 cm, preferably smaller than 3 cm.

In other terms, the distance between the rotation axis of a bearing 28 and the hinge axis of the lever 26 to the first infusing member 3 is smaller than 5 cm, preferably smaller than 4 cm.

Moreover, in both the embodiments shown in figures 1-4, the first fixed infusing member 3 further has an exchanger 30; in this way, differently from conventional machines, the infusion chamber is supplied by hot water almost directly, i.e. without long ducts involving heat loss.

In this way, the exchanger 30 has a water outlet duct 31 adapted to cooperate with the infusion chamber and, in particular, with appropriate injection means for injecting water into the infusion chamber through the first infusing member 3.

The injection means 37 for injecting water into the infusion chamber can have various shapes and size depending on the type of employed capsule 4 or pod and on the different employed technique of infusion.

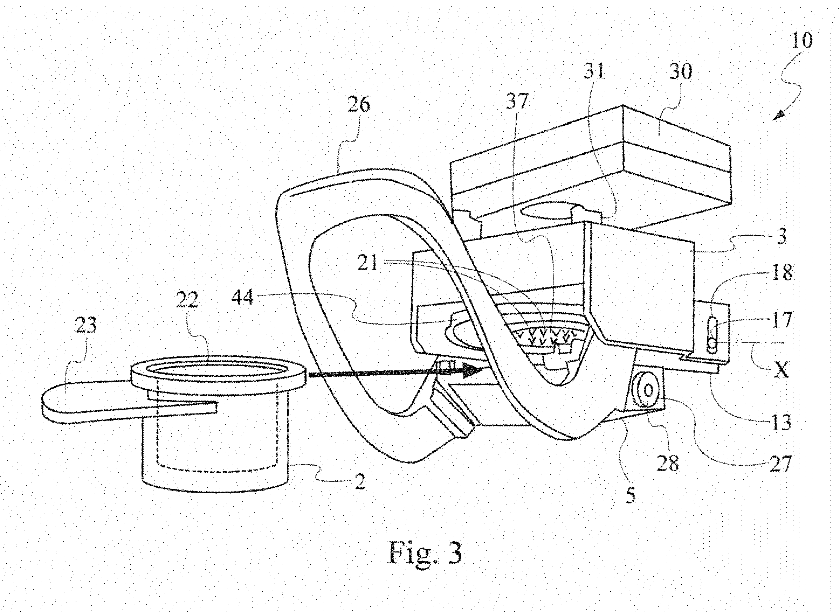

Referring to figure 3, for example, a first infusing member 3 is shown with injection means 37 for injecting water inside the capsule infusion chamber for making a coffee.

In detail, according to this embodiment, the injection means 37 for injecting water into the infusion chamber are depicted by a plurality of needles 21 and an inflow duct, the latter being fluidically connected with the water outlet duct 31 of the exchanger 30.

The needles 21 are fluidically connected with the inflow duct, which is truly responsible for injecting water into the capsule, for this purpose being widened thereby taking a dome-like shape in the section next to the needles 21.

The capsules for making coffee need, as a matter of fact, to be pierced in several points on their upper surface in order to guarantee a greater exchange surface between hot water and coffee.

To the embodiments herein represented in detail various modifications can be made, anyway remaining in the protection scope of the invention, defined by the following claims.

## Claims

1. Infusion device (10), particularly for machines for preparing an infusion beverage with a capsule (4) containing an aromatic substance, comprising:
- a first infusing member (3),
- a second infusing member (5) adapted for cooperating with said first infusing member (3); said second infusing member (5) comprising a housing seat (40) for a capsule-holder (2) or a pod-holder;
- said capsule-holder (2) or pod-holder comprising a recess for at least partially accommodating an infusion capsule (4);
- said capsule-holder (2) or pod-holder being removably introducible in said housing seat (40);
- said second infusing member (5) being hinged to said first infusing member along a hinge axis (X-X) to rotate with respect to said first infusing member (3) between a closed position, in which said second infusing member (5) closes said first infusing member (3) to define a capsule-holder (2) or pod-holder inserted in said housing seat (40), an infusion chamber and a rotated open position in which said second infusing member (5) is partially spaced from the first infusing member (3) of a distance allowing the capsule-holder (2) or pod-holder to be drawn out;
- said second infusing member (5) being hinged to said first infusing member (3) so that the hinge axis (X-X) is free to pitch;
characterised that it comprises
- activating means adapted to activate the second infusing member (5) for the rotation movement from the open position to the closed position, and vice versa;
- said activating means comprise at least one pivot member (27) and at least one curvilinear profile (25),
- said pivot member (27) takes the form of a manually operable lever (26) operatively hinged to the first infusing member (3) so that the rotation of said lever (26) in a way entails the rotation of said at least one pivot member (27) with respect to said curvilinear profile (25) integral to said second infusing member (5) and , consequently, the movement of the second infusing member (5) from said open position to said closed position;
- said at least one curvilinear profile (25) is made so that its convexity faces said at least one pivot member (27).

2. Infusion device (10) according to claim 1, **characterized in that** said second infusing member (5) comprises a distal portion and a proximal portion; said second infusing member (5) being hinged to said first infusing member (3) at said distal portion so that, in said closed position, said proximal portion is coupled to a corresponding proximal portion of said first infusing member (3) whereas, in said open position, said proximal portion of said second infusing member (5) is angularly spaced from said proximal portion of said first infusing member (3).

3. Infusion device (10) according to claim 1, **characterized in that** said second infusing member (5) comprises at least one hinge pin (17) hinging said first infusing member (3), said hinge pin (17) sliding in a slot (18) extending substantially vertically.

4. Infusion device (10) according to claim 3, **characterized in that** said slot (18) has an extent of at least 3 mm.

5. Infusion device (10) according to claim 3 or 4, **characterized by** having two hinge pins (17) arranged along the hinge axis (X-X), each adapted to slide in a slot (18) extending substantially vertically in said first infusing member (3).

6. Infusion device (100) according to claim 1, **characterized in that** said activating lever (26) comprises two pivot members (27) each adapted to cooperate with a curvilinear profile (25) integral to said second infusing member (3).

7. Infusion device (100) according to claim 6, **characterized in that** each curvilinear profile (25) has at least one first substantially straight length, at least one second substantially straight length and at least one curved length interposed between said first and second straight lengths, said first substantially straight length having an extent greater than the second substantially straight length.

8. Infusion device (100) according to any one of preceding claims 1 to 7, **characterized in that** the second infusing member (5) is made in one piece with two side tines (44, 45) transversely spaced to define the housing seat (40) for the capsule-holder (2).

9. Infusion device (100) according to any one of preceding claims 1 to 8, **characterized in that** said second infusing member (5) is hinged to said first infusing member (3) so that the hinge axis (X-X) is free to vertically translate.

## Patentansprüche

1. Infusionsvorrichtung (10), insbesondere für Maschinen zur Herstellung eines Infusionsgetränks mit einer Kapsel (4), die eine aromatische Substanz enthält, umfassend:
- ein erstes Infusionselement (3);
- ein zweites Infusionselement (5), das zur Zusammenarbeit mit dem ersten Infusionselement (3) angepasst ist; wobei das zweite Infusionselement (5) einen Gehäusesitz (40) für einen Kapselhalter (2) oder einen Hülsenhalter umfasst;
- der Kapselhalter (2) oder Hülsenhalter umfasst eine Aussparung zur zumindest teilweisen Aufnahme einer Infusionskapsel (4);
- wobei der Kapselhalter (2) oder der Hülsenhalter entfernbar in den Gehäusesitz (40) einführbar ist;
- wobei das zweite Infusionselement (5) entlang einer Scharnierachse (X-X) an dem ersten Infusionselement angelenkt ist, um sich in Bezug auf das erste Infusionselement (3) zwischen einer geschlossenen Position, in der das zweite Infusionselement (5) das erste Infusionselement (3) zum Definieren eines Kapselhalters (2) oder Hülsenhalters, der in den Gehäusesitz (40) eingesetzt ist, schließt, einer Infusionskammer und einer gedrehten offenen Position, in der das zweite Infusionselement (5) teilweise von dem ersten Infusionselement (3) mit einem Abstand, der das Herausziehen des Kapselhalters (2) oder des Hülsenhalters ermöglicht, beabstandet ist, zu drehen;
- das zweite Infusionselement (5) ist an dem ersten Infusionselement (3) angelenkt, so dass die Scharnierachse (X-X) frei zur Neigung ist;
**dadurch gekennzeichnet, dass** diese umfasst
- Aktivierungsmittel, die angepasst sind, um das zweite Infusionselement (5) für die Rotationsbewegung von der offenen Position in die geschlossene Position und umgekehrt zu aktivieren;
- die Aktivierungsmittel umfassen mindestens ein Schwenkelement (27) und mindestens ein krummliniges Profil (25);
- das Schwenkelement (27) hat die Form eines manuell betätigbaren Hebels (26), der betriebsmäßig an dem ersten Infusionselement (3) angelenkt ist, so dass die Drehung des Hebels (26) in gewisser Weise die Drehung des mindestens einen Schwenkelements (27) in Bezug auf das krummlinige Profil (25), das in das zweite Infusionselement (5) integriert ist, und folglich die Bewegung des zweiten Infusionselements (5) von dieser offenen Position zu der geschlossenen Position beinhaltet;
- das mindestens eine krummlinige Profil (25) ist so hergestellt, dass seine Konvexität dem mindestens einen Schwenkelement (27) zugewandt ist.

2. Infusionsvorrichtung (10) nach Anspruch 1, **dadurch gekennzeichnet, dass** das zweite Infusionselement (5) einen distalen Abschnitt und einen proximalen Abschnitt umfasst; wobei das zweite Infusionselement (5) an dem distalen Abschnitt an dem ersten Infusionselement (3) angelenkt ist, so dass in der geschlossenen Position der proximale Abschnitt mit einem entsprechenden proximalen Abschnitt des ersten Infusionselements (3) gekoppelt ist, während in der offenen Position der proximale Abschnitt des zweiten Infusionselements (5) in einem Winkelabstand zu dem proximalen Abschnitt des ersten Infusionselements (3) angeordnet ist.

3. Infusionsvorrichtung (10) nach Anspruch 1, **dadurch gekennzeichnet, dass** das zweite Infusionselement (5) mindestens einen Scharnierstift (17) umfasst, der das erste Infusionselement (3) schwenkt, wobei der Scharnierstift (17) in einem Schlitz (18) gleitet, der sich im Wesentlichen vertikal erstreckt.

4. Infusionsvorrichtung (10) nach Anspruch 3, **dadurch gekennzeichnet, dass** der Schlitz (18) eine Ausdehnung von mindestens 3 mm aufweist.

5. Infusionsvorrichtung (10) nach Anspruch 3 oder 4, **gekennzeichnet durch** zwei Scharnierstifte (17), die entlang der Scharnierachse (X-X) angeordnet sind und jeweils dazu ausgelegt sind, in einem Schlitz (18) zu gleiten, der sich in dem ersten Infusionselement (3) im Wesentlichen vertikal erstreckt.

6. Infusionsvorrichtung (100) nach Anspruch 1, **dadurch gekennzeichnet, dass** der Aktivierungshebel (26) zwei Schwenkelemente (27) umfasst, die jeweils dazu ausgelegt sind, mit einem krummlinigen Profil (25) zusammenzuarbeiten, das in das zweite Infusionselement (3) integriert ist.

7. Infusionsvorrichtung (100) nach Anspruch 6, **dadurch gekennzeichnet, dass** jedes krummlinige Profil (25) mindestens eine erste im Wesentlichen gerade Länge, mindestens eine zweite im Wesentlichen gerade Länge und mindestens eine gekrümmte Länge zwischen der ersten und der zweiten geraden Länge aufweist; wobei die erste im Wesentlichen gerade Länge eine Ausdehnung aufweist, die größer als die zweite im Wesentlichen gerade Länge ist.

8. Infusionsvorrichtung (100) nach einem der vorhergehenden Ansprüche 1 bis 7, **gekennzeichnet dadurch, dass** das zweite Infusionselement (5) in einem Stück mit zwei seitlichen Zinken (44, 45) hergestellt ist, die quer beabstandet sind, um den Gehäusesitz (40) für den Kapselhalter (2) zu definieren.

9. Infusionsvorrichtung (100) nach einem der vorhergehenden Ansprüche 1 bis 8, **gekennzeichnet dadurch, dass** das zweite Infusionselement (5) an dem ersten Infusionselement (3) angelenkt ist, so dass die Scharnierachse (X-X) frei ist, sich vertikal zu verschieben.

## Revendications

1. Dispositif d'infusion (10), en particulier pour des machines de préparation de boisson d'infusion avec une capsule (4) contenant une substance aromatique, comprenant :
- un premier élément d'infusion (3),
- un second élément d'infusion (5) adapté pour coopérer avec ledit premier élément d'infusion (3) ; ledit second élément d'infusion (5) comprenant un siège de logement (40) pour un porte-capsule (2) ou un porte-dosette ;
- ledit porte-capsule (2) ou porte-dosette comprenant un évidement pour loger au moins partiellement une capsule d'infusion (4) ;
- ledit porte-capsule (2) ou porte-dosette pouvant être introduit de manière amovible dans ledit siège de logement (40) ;
- ledit second élément d'infusion (5) étant articulé sur ledit premier élément d'infusion le long d'un axe d'articulation (X-X) pour tourner par rapport audit premier élément d'infusion (3) entre une position fermée, dans laquelle ledit second élément d'infusion (5) ferme ledit premier élément d'infusion (3) pour définir un porte-capsule (2) ou un porte-dosette inséré dans ledit siège de logement (40), une chambre d'infusion et une position ouverte tournée dans laquelle ledit second élément d'infusion (5) est partiellement espacé du premier élément d'infusion (3) d'une distance permettant de faire sortir le porte-capsule (2) ou le porte-dosette ;
- ledit second élément d'infusion (5) étant articulé sur ledit premier élément d'infusion (3) de façon que l'axe d'articulation (X-X) soit libre de tanguer ;
**caractérisé en ce qu'**il comprend
- des moyens d'activation adaptés pour activer le second élément d'infusion (5) pour le mouvement de rotation de la position ouverte vers la position fermée, et vice versa ;
- lesdits moyens d'activation comprennent au moins un élément pivotant (27) et au moins un profil curviligne (25) ;
- ledit élément pivotant (27) prend la forme d'un levier actionnable manuellement (26) articulé de manière fonctionnelle sur le premier élément d'infusion (3) de sorte que la rotation dudit levier (26) entraîne en quelque sorte la rotation dudit au moins un élément pivotant (27) par rapport audit profil curviligne (25) faisant partie intégrante dudit second élément d'infusion (5) et, par conséquent, le mouvement du second élément d'infusion (5) à partir de ladite position ouverte vers ladite position fermée ;
- ledit au moins un profil curviligne (25) est fabriqué de façon que sa convexité soit en face dudit au moins un élément pivotant (27).

2. Dispositif d'infusion (10) selon la revendication 1, **caractérisé en ce que** ledit second élément d'infusion (5) comprend une partie distale et une partie proximale ; ledit second élément d'infusion (5) étant articulé sur ledit premier élément d'infusion (3) au niveau de ladite partie distale de sorte que, dans ladite position fermée, ladite partie proximale est couplée à une partie proximale correspondante dudit premier élément d'infusion (3) tandis que, dans ladite position ouverte, ladite partie proximale dudit second élément d'infusion (5) est espacée angulairement de ladite partie proximale dudit premier élément d'infusion (3).

3. Dispositif d'infusion (10) selon la revendication 1, **caractérisé en ce que** ledit second élément d'infusion (5) comprend au moins une tige d'articulation (17) articulant ledit premier élément d'infusion (3), ladite tige d'articulation (17) coulissant dans une fente (18) s'étendant sensiblement verticalement.

4. Dispositif d'infusion (10) selon la revendication 3, **caractérisé en ce que** ladite fente (18) présente une étendue d'au moins 3 mm.

5. Dispositif d'infusion (10) selon la revendication 3 ou 4, **caractérisé en ce qu'**il présente deux tiges d'articulation (17) agencées le long de l'axe d'articulation (X-X), chacune étant adaptée pour coulisser dans une fente (18) s'étendant sensiblement verticalement dans ledit premier élément d'infusion (3).

6. Dispositif d'infusion (100) selon la revendication 1, **caractérisé en ce que** ledit levier d'activation (26) comprend deux éléments pivotants (27) adaptés chacun pour coopérer avec un profil curviligne (25) faisant partie intégrante dudit second élément d'infusion (3).

7. Dispositif d'infusion (100) selon la revendication 6, **caractérisé en ce que** chaque profil curviligne (25) présente au moins une première longueur sensiblement rectiligne, au moins une seconde longueur sensiblement rectiligne et au moins une longueur incurvée interposée entre lesdites première et seconde longueurs rectilignes, ladite première longueur sensiblement rectiligne présentant une étendue supérieure à la seconde longueur sensiblement rectiligne.

8. Dispositif d'infusion (100) selon l'une quelconque des revendications 1 à 7 précédentes, **caractérisé en ce que** le second élément d'infusion (5) est fait d'une seule pièce ayant deux dents latérales (44, 45) espacées transversalement pour définir le siège de logement (40) pour le porte-capsule (2).

9. Dispositif d'infusion (100) selon l'une quelconque des revendications 1 à 8 précédentes, **caractérisé en ce que** ledit second élément d'infusion (5) est articulé sur ledit premier élément d'infusion (3) de façon que l'axe d'articulation (X-X) soit libre de se translater verticalement.
